Europäisches Patentamt

European Patent Office

Office européen des brevets

(19)

(11) Veröffentlichungsnummer: **0 212 183**
**B1**

(12)    **EUROPÄISCHE PATENTSCHRIFT**

(45) Veröffentlichungstag der Patentschrift: **30.01.91**

(51) Int. Cl.⁵: **A 01 F 12/44,** A 01 D 75/28

(21) Anmeldenummer: **86109173.4**

(22) Anmeldetag: **04.07.86**

(54) Mähdrescher.

(30) Priorität: **27.08.85 DE 3530566**

(43) Veröffentlichungstag der Anmeldung:
**04.03.87 Patentblatt 87/10**

(45) Bekanntmachung des Hinweises auf die
Patenterteilung:
**30.01.91 Patentblatt 91/05**

(84) Benannte Vertragsstaaten:
**BE DE FR GB IT**

(56) Entgegenhaltungen:
AT-B- 294 476
DE-A-2 015 701
DE-A-2 632 560
FR-A-2 328 391
GB-A-2 072 050
GB-A-2 146 218
US-A-2 500 448
US-A-4 535 788

(73) Patentinhaber: **Klöckner-Humboldt-Deutz
Aktiengesellschaft
Deutz-Mülheimer-Strasse 111 Postfach 80 05 09
D-5000 Köln 80 (DE)**

(72) Erfinder: **Grobler, Werner-Hendrik
Schanzstrasse 8
D-8881 Haunsheim (DE)**
Erfinder: **Haschner, Alfred
Osterhoferstrasse 5
D-8886 Wittislingen (DE)**

(74) Vertreter: **Haft, Berngruber, Czybulka
Postfach 14 02 46 Hans-Sachs-Strasse 5
D-8000 München 5 (DE)**

Courier Press, Leamington Spa, England.

**Beschreibung**

Die Erfindung betrifft einen Mähdrescher mit einer Schnied- und Zufuhranordnung für das Erntegut, einer Dreschanordnung, einer Gebläseanordnung, einem Vorbereitungsboden und einer Siebanordnung, die aus einem Obersieb und einem Untersieb besteht, wobei sowohl der Vorbereitungsboden als auch das Obersieb verschwenkbar sind, während das Untersieb nicht verschwenkbar ist.

Bei einem derartigen Mähdrescher wird das geerntete Gut über die Zufuhranordnung der Dreschanordnung zugeführt, in der die Körner abgeschieden werden. Das ausgedroschene Stroh wird anschließend über einen Hordenschüttler und mehrere Steilstufen dem rückwärtigen Ende des Mähdreschers zugeführt. Die ausgedroschenen Körner sowie Spreu und nicht ausgedroschene Ähren gelangen hingegen auf den Vorbereitungsboden, von dem aus sie der Siebanordnung zugeführt werden. Vor der aus einem Obersieb und einem Untersieb bestehenden Siebanordnung, die durch eine geeignete Schütteleinrichtung in Schwingungen versetzt wird, ist ein Gebläse angeordnet um die Körner von der Spreu und sonstigen Verunreinigungen zu trennen. Die kleinen verhältnismäßig schweren Körner fallen dabei durch die Siebanordnung und werden dann über einen Körnerelevator einem Korntank zugeführt, während die leichtere Spreu und der Kurzstrohanteil über das rückwärtige Ende der Siebanordnung hinaus weggeblasen wird.

Der Wirkungsgrad des Trennens von Spreu und Körnern ist um so höher, je regelmäßiger das Erntegut der Anordnung zugeführt wird und je gleichmäßiger die Reinigungsluft die Siebanordnung durchströmt. Die besten Ergebnisse werden dann erzielt, wenn sich der Mähdrescher in waagrechter Stellung befindet, da bei Bodenunebenheiten insbesondere in Hanglagen sich das Erntegut entweder bereits auf dem Vorbereitungsboden oder auch auf der Siebanordnung, der Schwekraft folgend, auf einer Seite ansammelt, so daß keine optimale Trennung der Spreu von den Körnern ermöglicht wird.

Es wurde daher bereits vorgeschlagen, in Längsrichtung des Vorbereitungsbodens und der Siebanordnung, d.h. in Fahrtrichtung des Mähdreschers im Abstand voneinander angeordnete, parallele Leitbleche vorzusehen, die verhindern sollen, daß sich das ausgedroschene Erntegut auf der unteren Seite des geneigt fahrenden Mähdreschers ansammelt. Hierdurch kann jedoch nur eine teilweise Verbesserung erfolgen, da innerhalb eines jeden vom Erntegut zurückgelegten Transportstreifens immer noch eine Verschiebung in Richtung des niedriger liegenden Randes erfolgt. Ferner ist noch bei ungleichmäßiger Beaufschlagung der Siebanordnung der von der Gebläseanordnung stammende Luftstrom ungleichmäßig wirksam, wodurch keine optimale Trennung von Spreu und Körnern gewährleistet ist. Die Trennluft hat nämlich die Neigung durch die weniger beaufschlagten Siebanordnungsabschnitte zu entweichen, wodurch die überlegten Siebanordnungsabschnitte nur verminderten Luftströmen ausgesetzt sind.

Aus der DE—A—19 36 095 ist eine Siebeinrichtung für Mähdrescher bekannt, die unterhalb der Dreschanordnung vorgesehen ist und mit etwa waagrecht liegenden Flachsieben zur Reinigung des gedroschenen Gutes versehen ist. Die Siebeinrichtung ist dabei um eine annähernd horizontale in Fahrtrichtung liegende Mittelachse pendelbar angeordnet, so daß der Vorteil erzielt wird, daß auch beim Arbeiten am Hang die Siebanordnung gleichmäßig mit Erntegut beaufschlagt wird.

In der DE—A—35 04 003 ist ein Mähdrescher beschrieben, der eine aus einem Obersieb und einem Untersieb bestehende Siebanordnung aufweist, wobei sowohl das Obersieb als auch das Untersieb in eine Vielzahl von in Längsrichtung des Mähdreschers gesehen parallel nebeneinanderliegende Siebabschnitte unterteilt ist und jeder Siebabschnitt an einer in Längsrichtung des Mähdreschers liegenden im wesentlichen waagrecht und mittig zum Siebabschnitt verlaufenden Achse pendelnd aufgehängt ist, wobei jedem Siebabschnitt ein Axialgebläse zugeordnet ist.

Die US—A—45 35 788 beschreibt einen Mähdrescher, der eine aus einem Obersieb und einem Untersieb bestehende Siebanordnung aufweist, sowie einen Vorbereitungsboden aufweist, wobei sowohl der Vorbereitungsboden als auch das Obersieb in einem gemeinsamen Rahmen angeordnet sind, der mittels eines Hydraulikzylinders in Abhängigkeit von einer Hangneigung quer zur Längsrichtung des Mähreschers verschwenkbar ist. Dies bedeutet zum einen, daß beide Teile ihre relative Lage auch im verschwenkten Zustand beibehalten, da sie um den gleichen Betrag verschwenkt werden, und zum anderen, daß ein erheblicher Platzbedarf erforderlich ist, um auch bei größeren Hangneigungen eine ausreichende Verschwenkbarkeit sicherzustellen.

Aufgabe der vorliegenden Erfindung ist es, einen Mährdrescher zu schaffen von besonders einfachem aber wirkungsvollem Aufbau und der mit hohem Wirkungsgrad eine Trennung von Spreu und Körnern gewährleistet.

Ausgehend vom einem Mähdrescher der eingangs näher genannten Art, erfolgt die Lösung dieser Aufgabe mit den im kennzeichnenden Teil des Patentanspruches 1 angegebenen Merkmalen; vorteilhafte Ausgestaltungen sind in den Unteransprüchen beschrieben.

Der erfindungsgemäße Mährescher ist einfach aber wirkungsvoll aufgebaut, so daß ein optimaler Wirkungsgrad bezüglich der Trennung von Körnern und Spreu gewährleistet ist. Da nur der Vorbereitungsboden und das Obersieb bei Hanglagen in die waagrechte Stellung verschwenkt werden, ist es möglich, herkömmliche Mähredscher, die über keinerlei Hangausgleich verfügen, mit geringem Aufwand umzurüsten. Insbesondere bei Aufteilung in zwei oder mehrere nebeneinanderliegende Siebteile wird nur wenig Bauhöhe benötigt, wodurch der Einbau in vorhandene Mähdrescher leichter wird, da Aufhängung und Antrieb von Vorbereitungsboden und Siebanordnung sowie Gebläseanordnung unverändert bleiben.

Die sphärische Ausgestaltung der Lager an den Trägern für Vorbereitungsboden und Obersieb zur Aufnahme der Schwenkhebel für die Stellglieder weist den Vorteil auf, daß die Bewegungen insbesondere das Obersiebes leicht zu kompensieren sind. Die Verstellwinkel von Vorbereitungsboden und Obersieb können unterschiedlich sein.

Durch einen über die horizontale Lage hinausgehenden Verschwenkungswinkel von Vorbereitungsboden und Obersieb kann auch eine Überkompensation der Hangabtriebskomponente ermöglicht werden. Bei Gegenläufigkeit von Vorbereitungsboden und Obersieb ist ein Längsausgleich der Verstellkinematik vorgesehen.

Im folgenden wird die Erfindung anhand der Zeichnung näher erläutert, in der ein vorteilhaftes Ausführungsbeispieldes erfindungsgemäßen Mähdreschers dargestellt ist.

Es zeigen:

Figur 1 schematisch eine Seitenansicht des wesentlichen Teils eines Mähreschers und

Figure 2 einen Schnitt entlang der Linie A—A von Figur 1.

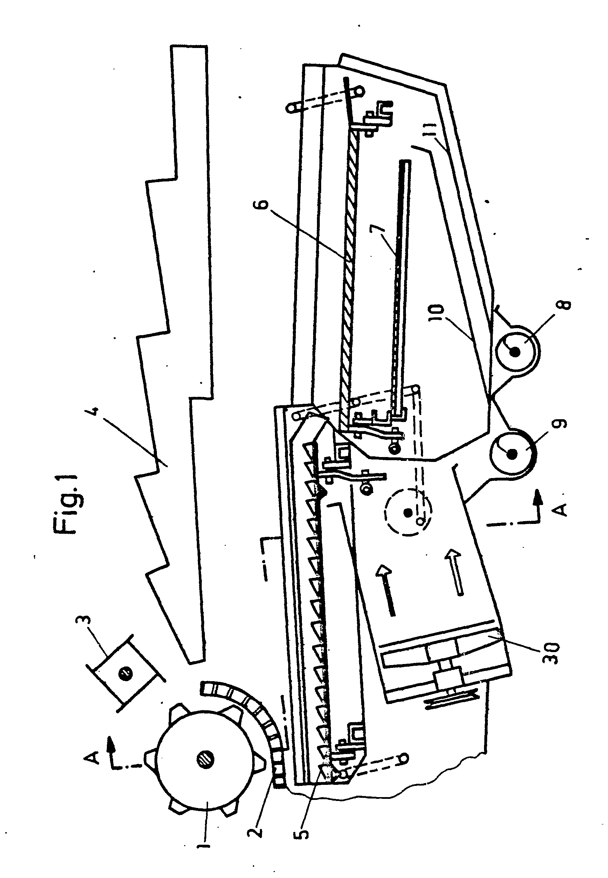

In Figur 1 ist schematisch der wesentliche Aufbau eines Mähdreschers dargestellt, wobei von einer nicht dargestellten Schneideinrichtung des Erntegut der Dreschtrommel 1 mit Dreschsieb 2 zugefürt wird. Mit 3 ist ein Strohabnehmer bezeichnet, der das ausgedrosschene Erntegut dem Hordenschüttler 4 zuführt.

Die ausgedroschenen Körner gelangen mit Spreu und Kurzstroh auf den Vorbereitungsboden 5, von dem sie der Siebanordnung zugeführt werden, die aus dem Obersieb 6 und dem Untersieb 7 besteht. Die Siebanordnung wird durch einen geeigneten Exzenterantrieb in schwingende Bewegungen versetzt, so daß durch die dabei erfolgende Schüttelbewegung die Körner durch das Obersieb 6 und das Untersieb 7 auf ein Führungsblech 10 gelangen, von wo aus sie dem Körnerelevator 9 zugeführt werden. Vom Körnerelevator 9 aus gelangen die Körner zu einem nicht dargestellten Korntank. Nicht ausgedroschene Ähren, die sogenannte Überkehr, fällt vom Ende des Obersiebes 6 auf ein weiteres Führungsblech 11 und von da in das mit 8 bezeichnete Überkehrsystem, das mit Wurfelelevatoren versehen sein kann um so diese Ähren erneut auf den Vorbereitungsboden 5 zu befördern.

Unterhalb des Vorbereitungsbodens 5 und vor der Siebanordnung ist eine Gebläseanordnung 30 vorgesehen, die z.B. ein Axialgebläse sein kann und in Richtung der beiden Pfeile die Siebanordnung mit Reinigungsluft beaufschlagt.

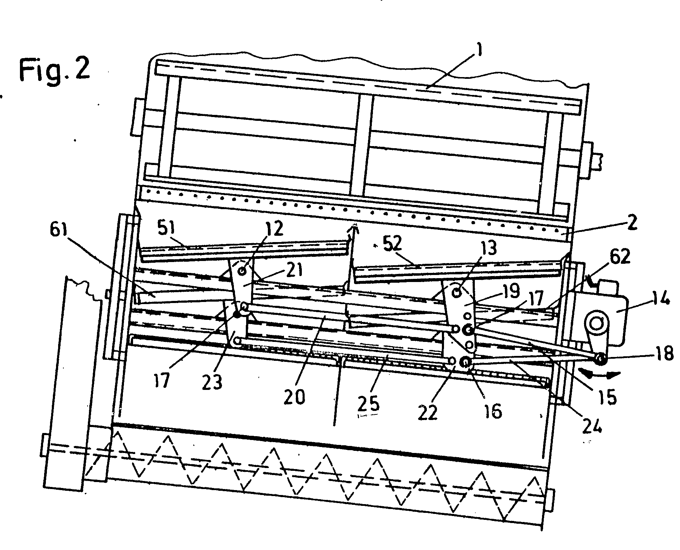

Wie insbesondere der Schnitt von Figur 2 zeigt, besteht sowohl der Vorbereitungsboden 5 als auch das Obersieb 6 aus zwei parallelen nebeneinander und in Längsrichtung des Mähreschers angeordneten Teilen 51, 52 bzw. 61, 62, die jeweils um eine in etwa mittig angeordnete Drehachse verschwenkbar sind, wobei diese Drehachsen für die Vorbereitungsbodenteile mit 12 und 13 bezeichnet sind. Bei dem hier dargestellten Ausführungsbeispiel ist der Teil 52 des Vorbereitungsbodens auf einem Träger 19 befestigt, der über einen Schwenkhebel 15 mit dem Stellhebel eines Stellmotors 14 verbunden ist. Der Träger 19 ist über einen zweiten Verbindungshebel 20 mit einem zweiten Träger 21 verbunden, auf dem das zweite Teile 51 des Vorbereitungsbodens befestigt ist. Die Träger 19 und 21 sind mit sphärischen Lagern 17 versehen, an denen die Schwenk- und Verbindungshebel 15, 20 angreifen um so einen besseren Bewegungsausgleich zu erzielen. Auch der Stellhebel des Stellmotors 14 ist mit einem sphärischen Lager 18 versehen. Ferner weist der erste zwangsgesteuert Träger 19 mehrere Öffnungen für das Ansetzen des Schwenkhebels 15 auf um so den Verschwenkungswinkel der Teile 51 und 52 einstellen zu können.

Auch das Obersieb 6 ist in zwei parallele nebeneinander in Längsrichtung des Mähdreschers liegende Teile 61, 62 unterteilt, wobei das Teil 62 ebenfalls auf einem Träger 22 angeordnet ist, der über einen Schwenkhebel 24 von einem Stellmotor betätigbar ist. Der Träger 22 ist mit dem Träger 23 über einen Verbindungshebel 25 verbunden, wobei beide Teile der gleiche Querneigung erhalten können. Auch der Träger 22 weist mehrere Öffnungen zur Aufnahme des Schwenkhebels 24 auf, der ebenfalls über ein sphärisches Lager 16 mit diesem Träger verbunden ist.

Vorbereitungsboden 5 und Obersieb 6 bzw. deren Teile 51, 52 bzw. 61, 62 können je über einen eigenen Stellmotor oder über einen gemeinsamen Stellmotor 14 betätigt werden, wobei um unterschiedliche Verschwenkungswinkel zu ermöglichen bei einem gemeinsamen Stellmotor unterschiedliche Lagerstellen für die Schwenkhebel 24, 15 gewählt werden können. Ferner erfolgt die Abtastung der Hanglage z.B. mittels eines Sensors oder mittels eines Pendals, so daß der Stellmotor 14 automatische gesteuert werden kann und Vorbereitungsboden und Obersieb derart einstellt, daß diese bzw. deren parallele nebeneinanderliegende Teile eine im wesentlichen waagrechte Stellung bei entsprechenden Hanglagen einnehmen. Zum Kompensieren der durch die am Hang entstehende Schräglage des Schwingantriebes auftretende Hangabtriebskraft ist es vorteilhaft, den Vorbereitungsboden bzw. das Obersieb etwas über die horizontale Lage zum Hang hin zu verschwenken.

Da bei dieser Ausführung das Untersieb fest eingebaut ist, und nur eine seitliche Verschwenkung von Vorbereitungsboden und Obersieb erfolgt, wird nur wenig Bauhöhe benötigt; auch ist eine nachträgliche Umrüstung herkömmlicher Mähdrescher ohne Hangausgleicht ohne weiteres möglich.

**Patentansprüche**

1. Mähdrescher, mit:

einer Schneid- und Zufuhranordnung für das Erntegut,

einer Dreschanordnung (1, 2),

einer Gebläseanordnung (30),

einem Vorbereitungsboden (5) und

einer Siebanordnung, die aus einem Obersieb (6) und

einem Untersieb (7) besteht,

wobei sowohl der Vorbereitungsboden (5) als auch das Obersieb (6) verschwenkbar sind, während das Untersieb (7) nicht verschwenkbar ist,

dadurch gekennzeichnet, daß sowohl der Vorbereitungsboden (5) als auch das Obersieb (6) aus mehreren in Längsrichtung des Mähdreschers nebeneinander liegenden Teilen (51, 52, 61, 62) bestehen, die jeweils um eine in Längsrichtung des Mädreschers angeordnete Drehachse verschwenkbar sind,

daß jeder Teil (51, 52) des Vorbereitungsbodens auf einem Träger (19, 21) angeordnet ist, wobei die Träger miteinander über einen ersten Verbindungshebel (20) verbunden sind und einer der Träger (19) über einen ersten Schwenkhebel (15) mit einem Stellhebel eines Stellmotors (14) verbunden ist,

daß jeder Teil (61, 62) des Obersiebes auf einem Träger (22, 23) angeordnet ist, wobei die Träger miteinander über einen zweiten Verbindungshebel (25) verbunden sind und einer der Träger (22) über einen zweiten Schwenkhebel (24) mit dem Stellhebel des Stellmotors (14) verbunden ist und

daß mindestens einer der Träger (19) für den Vorbereitungsboden und einer der Träger (22) für das Obersieb mehrere Öffnungen zur Aufnahme des Schwenkhebels (15, 24) aufweist.

2. Mähdrescher nach Anspruch 1, dadurch gekennzeichnet, daß die Teile (51, 52) des Vorbereitungsbodens und die Teile (61, 62) des Obersiebes je mit einem eingenen Stellmotor (14) verbunden sind.

3. Mähdrescher nach Anspruch 1, dadurch gekennzeichnet, daß die Teile (51, 52) des Vorbereitungsbodens und die Teile (61, 62) des Obersiebes mit einem gemeinsamen Stellmotor (14) verbunden sind.

4. Mähdrescher nach einem der vorhergehenden Ansprüche, dadurch gekennzeichnet, daß die Anlenkstellen der Schwenkhebel (15, 24) bzw. des Verbindungshebels (20) an den Trägern (19, 21, 22, 23) als sphärische Lager (16, 17, 18) ausgebildet sind.

**Revendications**

1. Moissonneuse-batteuse comprenant:

un dispositif de coupe et d'introduction de la récolte,

un dispositif batteur (1, 2),

un dispositif soufflant (30),

une table d'amenée (5) et

un dispositif tamiseur constitué d'un tamis supérieur (6) et d'un tamis inférieur (7),

où le plan de travail (5) ainsi que le tamis supérieur (6) sont inclinables, le tamis inférieur (7) n'étant pas inclinable, caractérisée en ce que

la table d'amenée (5) ainsi que le tamis supérieur (6) sont constitués de plusieurs éléments (51, 52, 61, 62) côte à côte dans le sens longitudinal de la moissonneuse-batteuse et qui sont inclinables autour d'axes disposés dans le sens longitudinal de la moissonneuse-batteuse,

chaque élément (51, 52) de la table d'amenée est fixé à un moyen (19, 21), les supports sont reliés entre eux au moyen d'un premier levier de raccordement (20) et un des supports (19) est raccordé au levier d'un moteur de positionnement (14) au moyen d'un premier levier (15),

chaque élément (61, 62) du tamis supérieur est fixé à un support (22, 23), les supports sont reliés entre eux au moyen d'un deuxième levier de raccordement (25) et un des supports (22) est raccordé au levier du moteur de positionnement (14) au moyen d'un deuxième levier (24) et

au moins un des supports (19) de la table d'amenée et un des supports (22) du tamis supérieur comporte plusieurs trous pour la fixation des leviers (24, 25).

2. Moissonneuse-batteuse selon la revendication 1, caractérisée en ce que les éléments (51, 52) de la table d'amenée et les éléments (61, 62) du tamis supérieur sont actionnés chacun par leur propre moteur de positionnement (14).

3. Moissonneuse-batteuse selon la revendication 1, caractérisée en ce que les éléments (51, 52) de la table d'amenée et les éléments (61, 62) du tamis supérieur sont actionnés par un même moteur de positionnement (14).

4. Moissonneuse-batteuse selon l'une quelconque des revendications précédentes, caractérisée en ce que les points de fixation des leviers (15, 24) et du levier de raccordement (20) au support (19, 21, 22, 23) sont des paliers sphériques (16, 17, 18).

**Claims**

1. Combine harvester having:

a cutting and feed arrangement for the crop to be harvested,

a threshing arrangement (1, 2),

a fan arrangement (30),

a preparation level (5), and

a sieve arrangement which consists of a top sieve (6) and a bottom sieve (7),

both the preparation level (5) and the top sieve (6) being pivotable, whereas the bottom sieve (7) is not pivotable,

characterized in that both the preparation level (5) and the top sieve (6) consist of a plurality of parts (51, 52, 61, 62) lying next to one another in the longitudinal direction of the combine harvester and which can each pivot about an axis of rotation arranged in the longitudinal direction of the combine harvester,

in that each part (51, 52) of the preparation level is arranged on a support (19, 21) the supports being connected to one another via a first connecting lever (20), and one of the supports (19) being connected to an adjusting lever of a servomotor (14) via a first pivoted lever (15),

in that each part (61, 62) of the top sieve is arranged on a support (22, 23), the supports being connected to one another via a second connecting lever (25) and one of the supports (22) being connected to the adjusting lever of the servomotor (14) via a second pivoted lever (24), and

in that at least one of the supports (19) for the preparation level and one of the supports (22) for the top sieve has a plurality of orifices for receiving the pivoted lever (15, 24).

2. Combine harvester according to Claim 1, characterized in that the parts (51, 52) of the preparation level and the parts (61, 62) of the top sieve are each connected to an independent servomotor (14).

3. Combine harvester according to Claim 1, characterized in that the parts (51, 52) of the preparation level and the parts (61, 62) of the top sieve are connected to a common servomotor (14).

4. Combine harvester according to one of the preceding claims, characterized in that the points of articulation of the pivoted levers (15, 24) and of the connecting lever (20) on the supports (19, 21, 22, 23), respectively, are designed as spherical bearings (16, 17, 18).

Fig.1

Fig. 2

EP 0 212 183 B1